# EUROPÄISCHE PATENTSCHRIFT

(11) **EP 0 676 989 B1**
(45) Veröffentlichungstag und Bekanntmachung des Hinweises auf die Patenterteilung: **10.07.1996**
(21) Anmeldenummer: 94901796.6
(22) Anmeldetag: 13.11.1993
(51) Int. Cl.: B09B 3/00, C02F 3/04

(54) **REAKTOR ZUR REINIGUNG KONTAMINIERTER FESTSTOFFE**
REACTOR FOR PURIFYING CONTAMINATED SOLIDS
REACTEUR PERMETTANT DE PURIFIER DES SOLIDES CONTAMINES

(30) Priorität: 03.01.1993 DE 9300023 U
(43) Veröffentlichungstag der Anmeldung: 18.10.1995
(73) Patentinhaber: HYDROGEOLOGIE GMBH, D-99734 Nordhausen (DE)
(72) Erfinder: KNACKSTEDT, Hans-Günther, D-63505 Langenselbold (DE)
(74) Vertreter: Kosel, Peter, Dipl.-Ing.
(86) Internationale Anmeldenummer: EP9303189
(87) Internationale Veröffentlichungsnummer: WO9415730

(56) Entgegenhaltungen:
- EP-A- 0 403 669
- EP-A- 0 498 147
- EP-A- 0 499 833
- WO-A-92/04138
- DE-C- 4 001 558
- GB-A- 493 473
- US-A- 4 962 034
- US-A- 4 993 943

## Beschreibung

Die Erfindung betrifft einen Reaktor nach dem Oberbegriff des Anspruchs 1.

Die Reinigung solcher Feststoffe geschieht bisher in Beeten oder Mieten. Diese haben eine verhältnismäßig große Grundfläche bei niedriger Schütthöhe. Dadurch wird es erforderlich, eine große Fläche zu bewässern. Das Wasser durchläuft nur eine kleine Schichtdicke mit der Folge, daß die zu reinigenden Feststoffe nur verhältnismäßig kurze Zeit im Austausch mit den im Wasser enthaltenen Nährsalzen stehen. Auch die Belüftung der Feststoffe muß auf einer verhältnismäßig großen Fläche vorgenommen werden und erfordert deshalb entsprechend hohen Aufwand.

Bei einem bekannten Reaktor der eingangs genannten Art (DE 40 01 558 C1) findet die Behandlung kontaminierten Erdreichs in drei aufeinanderfolgenden Verfahrensstufen statt. Dazu ist ein erheblicher baulicher, zeitlicher und Handlingsaufwand erforderlich. Zur Belüftung des Erdreichs wird Luft durch eine Zufuhrleitung einfach in den Zwischenraum zwischen dem Boden des Behälters und seinem Siebboden eingeblasen. So läßt sich das Erdreich nicht hinreichend gleichmäßig belüften. Auf den oberen Rand des Behälters ist in nur geringem Abstand vom Erdreich eine Abdeckung gelegt. Deshalb ist ein Sprühaggregat erforderlich, das durch die Abdeckung hindurchgeführt ist und sich mit hohem Bauaufwand fast über die gesamte Länge und wahrscheinlich auch Breite des Behälters erstreckt. An eine Durchbrechung der Abdeckung ist eine Gasabfuhrleitung angeschlossen.

Aus der WO 92/04138 A1 ist es an sich bekannt, stückiges Gut, z.B. Betonstücke, in einem oben offenen Behandlungsbehälter mit Boden und zylindrischer Seitenwand zu dekontaminieren. Das Gut liegt auf einem Rost im Abstand vom Boden. In dem Zwischenraum oder an der Seitenwand sind mehrere Belüfter verteilt. Mit aeroben Mikroorganismen beladene Flüssigkeit wird durch Düsen von oben auf das Gut gesprüht.

Aus der GB 493 473 A ist es an sich bekannt, verschmutzte Gegenstände, z.B. ölige Autoteile, mit einer Reinigungsflüssigkeit, z.B. Paraffin, abzuwaschen. Die Gegenstände werden auf einen Siebboden gelegt und dieser auf einen Bodenflansch eines inneren Bades eines Tanks aufgelegt. Die Reinigungsflüssigkeit wird aus Umlaufdüsen oder einem handbetätigten Schlauch auf die Gegenstände gespritzt und fließt durch den Siebboden mit abgewaschenem Schmutz ab in einen Filterkorb. Der Filterkorb hält Schmutzpartikel zurück und läßt die Reinigungsflüssigkeit zur Rezirkulation passieren.

Aus der EP 403 669 A1 ist es an sich bekannt, kontaminiertes körniges Waschgut, z.B. Erdreich, auf einen Siebboden in einer oben ständig offenen Waschmulde einzufüllen. Durch Eintragung von Wasser und Luft in die Waschmulde wird ein Wirbelbett gebildet, dessen Leistungsfähigkeit durch Zugabe von Tensiden verstärkt wird. Das Waschwasser verläßt die Waschmulde oben durch eine Überlaufrinne und wird in wenigstens einer Stufe für erneute Verwendung aufbereitet. Unter dem Siebboden sind Vakuumfilterkerzen für die Entwässerung des Waschguts am Ende des Waschvorgangs angeordnet.

Aus der EP 499 833 A1 ist ein großer, stationärer Mulden-Misch-Reaktor an sich bekannt. Eine oben offene, trogartige Mulde ist aus plattenförmigen Betonelementen zusammengesetzt und durch ein Gebäude oder eine Haube abgedeckt. In der Mulde sind eine Mischeinrichtung, ein Brausesystem oder Düseneinrichtungen, Dränagerohre und gelochte Rohre einer Lüftungseinrichtung montiert. In dem Gebäude oder der Haube ist ein Auslaß vorgesehen, durch den mit einer Absaugvorrichtung Abgase aus dem Reaktor abgezogen werden können.

Aus der EP 498 147 A1 ist ein Flachbett-Reaktor an sich bekannt, der eine nach oben ständig offene, rechteckige Wanne aufweist. In der Wanne sind drei zueinander parallele, sich in Längsrichtung der Wanne erstreckende Mischerwellen mit Rührpaddeln einer Mischeinrichtung ständig installiert. Entlang der Innenwand der Wanne sind perforierte Lüftungsrohre einer Belüftungseinrichtung verlegt. Der Boden der Wanne ist als Siebboden ausgebildet, der Flüssigkeit durchtreten läßt, die von einem externen Berieselungssystem auf die zu reinigenden Feststoffe aufgegeben wurde und dann durch die Feststoffe hindurchgedrungen ist. Diese Flüssigkeit wird durch eine gesonderte Bodenwanne aufgefangen, in der der ganze Reaktor aufgestellt werden muß. Unter einer Stirnseite der Wanne, die als Klapptür ausgebildet ist, sind Rollen an der Wanne angeordnet, die das Rangieren und die Entleerung der Wanne erleichtern. Auf den Siebboden kann eine Filterschicht aus verrottbarem organischem Material, z.B. Filterpapier, gelegt sein.

Aus der US 4 993 943 A ist es an sich bekannt, kontaminiertes Erdreich durch einen Schraubenförderer hindurchzubewegen und dabei zu reinigen. Dabei kann der Schraubenförderer und das in ihm befindliche Erdreich von Gas durchströmt und belüftet werden, das durch einen Anschluß zugeführt wird.

Aus der US 4 962 034 A ist ein großer, kreisförmiger, stationärer Reaktor an sich bekannt, der einen Boden und eine Seitenwand aufweist. Die Seitenwand ist oben durch eine dichte, domartige Abdeckung abgedeckt. An der oberen Begrenzungsebene der Seitenwand sind mehrere Versorgungsleitungen für Sprühdüsen angeordnet, mit denen Wasser und Nährstoffe auf die zu reinigenden Feststoffe gesprüht werden. In den Feststoffen laufen Rechenarme um eine Längsachse um. Die Flüssigkeitsversorgungsleitungen und die Bewässerungsdüsen können auch an der Unterseite einer verhältnismäßig flachen Abdeckung der Seitenwand angebracht sein. Oberhalb des Bodens sind dort Kanäle zur Einbringung von Luft in den zu reinigenden Boden vorgesehen.

Der Erfindung liegt die Aufgabe zugrunde, die Wirksamkeit des Reaktors bei Schonung der Umwelt zu erhöhen.

Diese Aufgabe ist durch die Merkmale des Anspruchs 1 gelöst. Die Reinigung der Feststoffe kann insbesondere biologisch oder mit chemischen Lösungsmitteln geschehen. Der Reaktor stellt ein mobiles, geschlossenes System dar, das jede Beeinträchtigung der Umwelt durch zunächst in dem Feststoff enthaltene Schadstoffe zuverlässig verhindert. Dies gilt für feste, gasförmige und flüssige Schadstoffe. Der Reaktor ist auch ein "dichtes Transportgerät" im Sinne der deutschen Gefahrgut-Verordnung Straße (GGVS). Der Behälter kann z.B. aus dicht geschweißten Stahlblechen hergestellt sein und in Standardausführung 1 bis 10 m³ kontaminierte Feststoffe aufnehmen. Dank seines großflächigen Bodens kann der Reaktor auch auf unbefestigtem Gelände aufgestellt werden. Durch die dichte Verarbeitung des Reaktorgehäuses sind bei seinem Betrieb keine zusätzlichen Anforderungen an den Arbeitsplatz zu stellen. Der Zwischenboden kann vorzugsweise als Siebblech kostengünstig und wirkungsvoll ausgebildet sein. Bei der in dem Zwischenraum angesammelten Flüssigkeit handelt es sich in der Regel um ein Wasser/Schadstoffgemisch. Dieses kann dank des tiefliegenden Auslasses ohne Abpumpen aus dem Reaktorgehäuse entfernt werden. Dadurch ergeben sich eine bauliche Vereinfachung und Energieersparnis. Der Auslaß für Gase gestattet ein Anlegen von Unterdruck und damit ein Abziehen flüchtiger Bestandteile der Schadstoffe. Die Ausbildung der Abdeckung als Haube bietet mehrere Vorteile. So ist oberhalb der Feststoffe ein Beruhigungsraum geschaffen, in dem sich Aerosole besser abscheiden lassen. Die aus dem Auslaß abgezogenen Gase weisen nur noch verhältnismäßig wenige Tröpfchen auf. Außerdem hat die Haube eine hohe Formsteifigkeit auch bei großen Abmessungen. Der Deckel ist vorzugsweise durch ein Scharnier an dem Rest der Haube angelenkt. Durch die zugehörige Öffnung können von außen Manipulationen, wie z.B. das Durchmischen des Feststoffbettes in dem Behälter, ausgeführt werden. Dies wird durch die Höhe der Haube vereinfacht und kann insbesondere dann ratsam sein, wenn der Behälter bis zu seiner oberen Grenze mit Feststoffen gefüllt ist. Durch die Anbringung der Sprühköpfe an dem Deckel erhält man definierte Berieselungsverhältnisse und einen minimalen baulichen und betrieblichen Aufwand für die Berieselungsvorrichtung. Dennoch wird eine sehr gleichmäßige Berieselung über die gesamte Oberfläche des Feststoffbettes erreicht. Auch hierfür ist die Höhe der Haube günstig. Durch seine Anordnung an der Haube kann der Auslaß für Gase an die optimale Stelle des Reaktorgehäuses gelegt werden.

Die Mittel des Anspruchs 2 gestatten eine besonders leichte und schnelle Handhabung der Haube.

Gemäß Anspruch 3 ist es auf einfache Weise möglich, zu jedem beliebigen Zeitpunkt Proben aus dem Feststoffbett zu entnehmen.

Gemäß Anspruch 4 findet mit besonderem Vorteil ein Anschlußrohr von verhältnismäßig großem Durchmesser Verwendung. Bei Anlegung von Unterdruck wird die auf die Feststoffe gesprühte oder gerieselte Reaktionsflüssigkeit kontrolliert durch die Feststoffe hindurchgesaugt. Wenn anderseits das Anschlußrohr mit Gas-Druckstößen beaufschlagt wird, dient dies zur Lockerung und Lüftung des Feststoffbettes. Als Druckgas kommt insbesondere Druckluft in Betracht.

Die Belüftungsvorrichtung gemäß Anspruch 5 kann je nach Bedarf kontinuierlich oder stoßweise betrieben werden. Bei stoßweisem Betrieb wird das Feststoffbett sowohl belüftet als auch aufgelockert.

Die Merkmale des Anspruchs 6 bringen den besonderen Vorteil, daß sich die Schlitze nur bei anliegendem Druckgas öffnen und das Druckgas in das Feststoffbett entlassen. Sobald die Druckgaszufuhr unterbrochen wird, schließen die Schlitze sich aufgrund der Elastizität der Schläuche selbsttätig und verhindern ein Eindringen von Bestandteilen der Feststoffe oder von Reaktionsflüssigkeit in das Innere der Schläuche.

Durch die Merkmale des Anspruchs 7 läßt sich der Reaktor am Arbeitsplatz leicht in die gewünschte Betriebsstellung rangieren.

Die Merkmale des Anspruchs 8 dienen der Erleichterung der Standortveränderung des Reaktors mit gängigen Mitteln.

Gemäß Anspruch 9 können die Abmaße des Reaktors so gewählt werden, daß er auf gängige Transportgeräte verladen und durch diese Transportgeräte gehandhabt werden und somit auf üblichen Fahrzeugen auf der Straße und der Schiene transportiert werden kann.

Die Merkmale des Anspruchs 10 dienen der raumsparenden Unterbringung der Bestandteile des Reaktors.

Weitere Merkmale und Vorteile der Erfindung ergeben sich aus der nachfolgenden Beschreibung eines Ausführungsbeispiels anhand der Zeichnungen. Es zeigt:
Fig. 1 eine teilweise längsgeschnittene Seitenansicht eines Reaktors,
Fig. 2 die teilweise quergeschnittene Ansicht gemäß Linie II-II in Fig. 1,
Fig. 3 eine teilweise geschnittene Draufsicht auf den Reaktor gemäß Fig. 1 und
Fig. 4 eine teilweise geschnittene andere Draufsicht auf den Reaktor gemäß Fig. 1.

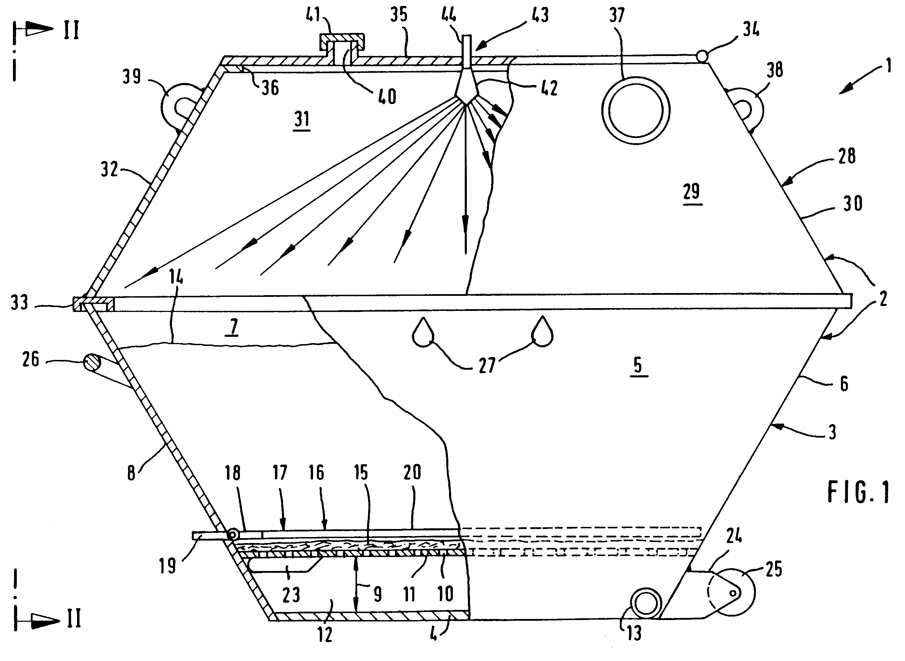

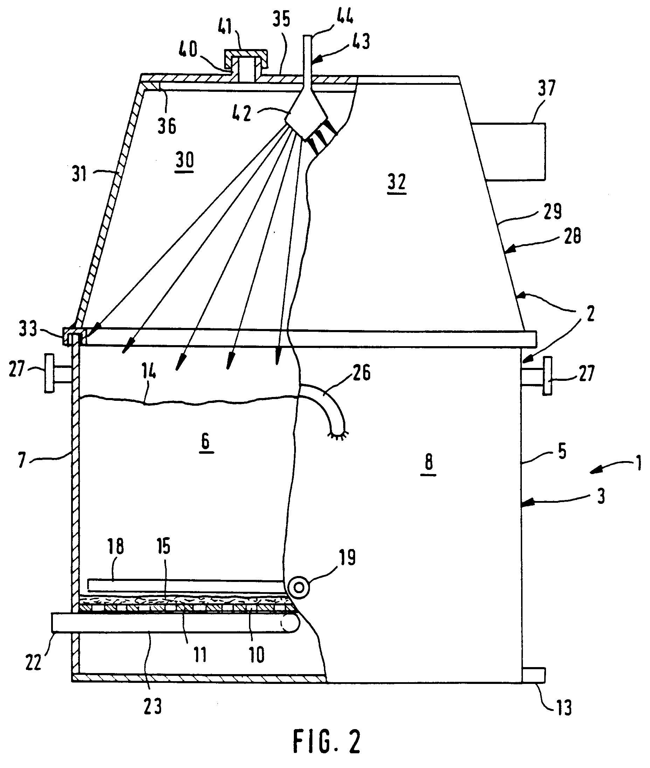

In Fig. 1 weist ein Reaktor 1 zur Reinigung von mit Schadstoffen kontaminierten Feststoffen ein Gehäuse 2 auf. Bestandteil des Gehäuses 2 ist ein oben offener, muldenartiger Behälter 3 mit einem Boden 4 und Seitenwänden 5 bis 8. Die Seitenwände 5 und 7 sind senkrecht angeordnet (Fig. 2), während die Seitenwände 6 und 8 nach unten und innen geneigt sind.

In einem senkrechten Abstand 9 von dem Boden 4 ist in dem Behälter 3 ein Perforationen 10 aufweisender Zwischenboden 11 angeordnet. Vorzugsweise ist dieser Zwischenboden 11 siebartig ausgebildet.

Ein Zwischenraum 12 zwischen dem Boden 4 und dem Zwischenboden 11 ist mit einem Auslaß 13 für Flüssigkeit versehen, die durch Feststoffe 14 und den Zwischenboden 11 hindurchgedrungen ist. Die Feststoffe 14 können sich je nach dem speziellen Einsatzfall bis zu einer unterschiedlichen Füllhöhe in dem Behälter 3 befinden.

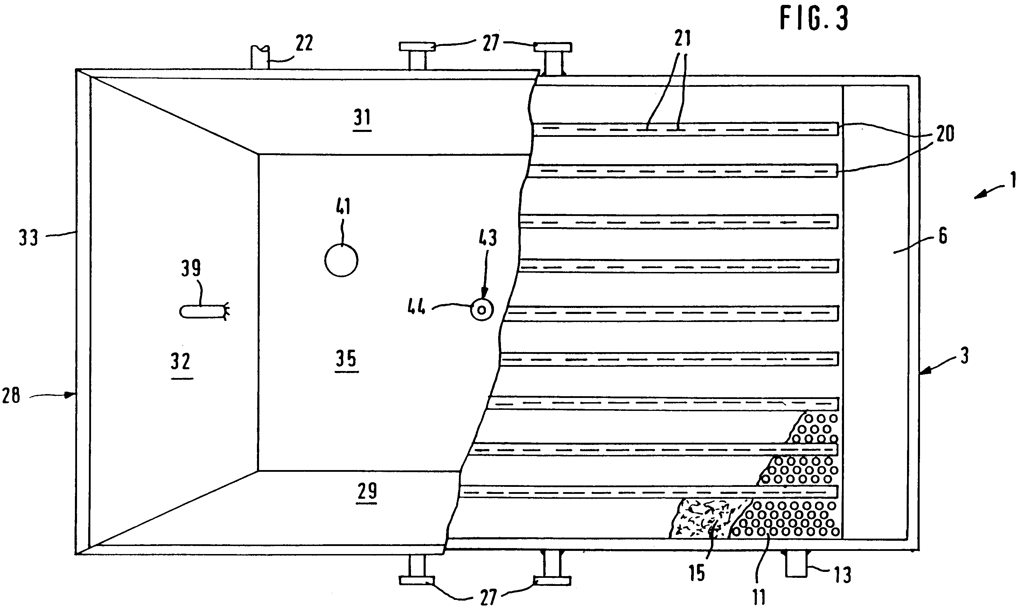

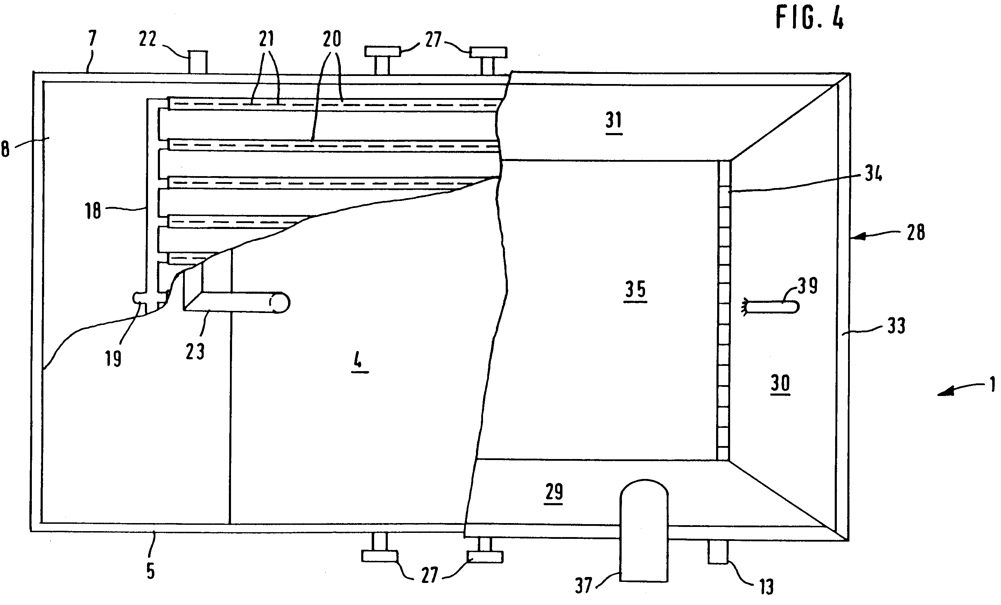

Auf den Zwischenboden 11 ist eine Filterschicht 15 aus einem organischen, verrottbaren Filtermedium aufgelegt. Auf der Filterschicht 15 liegen die Feststoffe. Oberhalb der Filterschicht 15 ist innerhalb der Feststoffe 14 ein Leitungssystem 16 einer Belüftungsvorrichtung 17 verlegt. Das Leitungssystem 16 weist ein Verteilerrohr 18 auf, das von außen über einen Anschluß 19 mit Druckluft oder Drucksauerstoff beschickt werden kann. An die einzelnen Auslässe des Verteilerrohrs 18 sind elastische Schläuche 20 des Leitungssystems 16 angeschlossen. Jeder Schlauch 20 ist mit sich in seiner Längsrichtung erstreckenden Schlitzen 21 (Fig. 3 und 4) versehen. Die Schlitze 21 weiten sich, sobald auf den Anschluß 19 Druckgas gegeben wird, und schließen sich, wenn die Druckgaszufuhr am Anschluß 19 unterbrochen wird. Auf diese Weise kann entweder kontinuierlich oder stoßweise Druckgas in die zu behandelnden Feststoffe gleichmäßig über den Querschnitt des Behälters 3 eingebracht werden.

In dem Zwischenraum 12 ist ein Rohr 23 von verhältnismäßig großem Durchmesser angeordnet, durch das über einen Anschluß 22 (Fig. 2 bis 4) wahlweise Unterdruck an den Zwischenraum 12 angelegt oder Druckgasstöße in den Zwischenraum 12 eingeleitet werden können.

An der Seitenwand 6 des Behälters 3 sind unten Lagerböcke 24 für in seilichem Abstand voneinander befindliche Laufrollen 25 befestigt. An der gegenüberliegenden Seitenwand 8 ist eine Anschlagöse 26 für eine Hebevorrichtung angeschweißt. Wird die Hebevorrichtung betätigt, stützt sich der Reaktor 1 auf den Laufrollen 25 ab und kann in diesem Zustand auf einfache Weise rangiert werden.

Die Seitenwände 5, 7 sind jeweils oben und außen an gegenüberliegenden, mittigen Stellen mit Kettenanschlägen 27 versehen, die ein Anheben des Behälters 3 oder des gesamten Reaktors 1 mit einer Hebevorrichtung ermöglichen.

Der Behälter 3 ist durch eine Haube 28 dicht verschließbar. Die Haube 28 besteht aus sich nach oben konisch verjüngenden Seitenwänden 29 bis 32, an die unten ein nach unten offenes, umlaufendes U-Profil 33 angeschweißt ist. Das U-Profil 33 übergreift mit seinen Schenkeln einen oberen Rand des Behälters 3, wie dies besonders deutlich links in Fig. 1 zu erkennen ist.

Die Seitenwand 30 trägt oben ein Scharnier 34, an dem ein Deckel 35 der Haube 28 heb- und senkbar angelenkt ist. Durch den Deckel 35 ist eine durch die Seitenwände 29 bis 32 definierte, obere Öffnung 36 der Haube 28 dicht verschließbar.

Die Seitenwand 29 ist mit einem Auslaß 37 für Gase versehen, die sich oberhalb der Feststoffe 14 in dem Gehäuse 2 ansammeln. An die Seitenwände 30, 32 sind außen Anschlagösen 38 und 39 angeschweißt, mit denen eine Hebevorrichtung zum Manövrieren der Haube 28 relativ zu dem Behälter 3 kuppelbar ist.

In dem Deckel 35 ist ein Probenentnahmestutzen 40 befestigt, der durch eine Kappe 41 dicht verschlossen ist, solange er nicht benötigt wird. Durch den Probenentnahmestutzen 40 können Proben der Feststoffe 14 aus dem Behälter 3 entnommen und analysiert werden. Der Deckel 35 trägt außerdem einen Sprühkopf 42 einer Berieselungsvorrichtung 43. Der Sprühkopf 42 wird über einen Anschluß 44 mit Flüssigkeit versorgt, die er breit gefächert im Sinne der in den Fig. 1 und 2 sichtbaren Pfeile über die maximale Querschnittsfläche des Gehäuses 2 verteilt. Als Flüssigkeiten kommen alle an sich bekannten Flüssigkeiten in Betracht, die zur Reinigung der Feststoffe geeignet sind.

Fig. 2 zeigt weitere Einzelheiten des Reaktors 1. Das Verteilerrohr 18 erstreckt sich fast über die gesamte Tiefe des Behälters 3.

Auch die Fig. 3 und 4 zeigen weitere Details des Reaktors 1 und deren relative Lage zueinander.

## Patentansprüche

1. Reaktor (1) zur Reinigung von mit Schadstoffen, z.B. Kohlenwasserstoffen, kontaminierten Feststoffen (14), z.B. Böden, Schlämmen und Metallspänen,
mit einer Berieselungsvorrichtung (43) und mit einer Belüftungsvorrichtung (17) für die Feststoffe (14),
wobei ein Gehäuse (2) des Reaktors (1) einen oben offenen, muldenartigen Behälter (3) mit einem Boden (4) und Seitenwänden (5 bis 8) aufweist,
wobei in einem senkrechten Abstand (9) von dem Boden (4) in dem Behälter (3) ein Perforationen (10) aufweisender, die Feststoffe (14) tragender Zwischenboden (11) angeordnet ist,
wobei ein Zwischenraum (12) zwischen dem Boden (4) und dem Zwischenboden (11) mit einem Auslaß (13) für durch die Feststoffe (14) und den Zwischenboden (11) hindurchgedrungene Flüssigkeit versehen ist,
wobei der Behälter (3) durch eine Abdeckung (28) dicht verschließbar ist,
und wobei oberhalb der Feststoffe (14) ein Auslaß (37) für Gase in dem Gehäuse (2) vorgesehen ist,
dadurch gekennzeichnet, daß die Abdeckung als auf einen oberen Rand des Behälters (3) dicht aufsetzbare Haube (28) mit sich über den Behälter (3) hinaus nach oben erstreckenden Seitenwänden (28 bis 32) ausgebildet ist,
daß die Haube (28) eine durch einen Deckel (35) dicht verschließbare Öffnung (36) aufweist,
daß die Berieselungsvorrichtung (43) wenigstens einen an dem Deckel montierten Sprühkopf (42) aufweist,
und daß der Auslaß (37) für Gase an der Haube (28) vorgesehen ist.

2. Reaktor nach Anspruch 1, dadurch gekennzeichnet, daß die Haube (28) mit Anschlagösen (38,39) für eine Hebevorrichtung versehen ist.

3. Reaktor nach Anspruch 1 oder 2, dadurch gekennzeichnet, daß an der Haube (28) wenigstens ein gegebenenfalls durch eine Kappe (41) wiederverschließbarer Probenentnahmestutzen (40) angebracht ist.

4. Reaktor nach einem der Ansprüche 1 bis 3, dadurch gekennzeichnet, daß in dem Zwischenraum (12) ein Rohr (23) mit einem Anschluß (22) zur wahlweisen Anlegung von Unterdruck oder Einleitung von Gas-Druckstößen in den Zwischenraum (12) angeordnet ist.

5. Reaktor nach einem der Ansprüche 1 bis 4, dadurch gekennzeichnet, daß die Belüftungsvorrichtung (17) in dem Behälter (3) ein innerhalb der Feststoffe (14) verlegtes Leitungssystem (16) aufweist, das über einen Anschluß (19) von außen mit Druckluft oder Drucksauerstoff beschickbar ist.

6. Reaktor nach Anspruch 5, dadurch gekennzeichnet, daß das Leitungssystem (16) wenigstens einen elastischen Schlauch (20) mit Schlitzen (21) aufweist.

7. Reaktor nach einem der Ansprüche 1 bis 6, dadurch gekennzeichnet, daß der Behälter (3) an einer (6) der Seitenwände (5 bis 8) unten mit wenigstens einer Laufrolle (25) und im Abstand von der wenigstens einen Laufrolle (25) mit wenigstens einer Anschlagöse (26) für eine Hebevorrichtung versehen ist.

8. Reaktor nach einem der Ansprüche 1 bis 7, dadurch gekennzeichnet, daß der Behälter (3) mit Kettenanschlägen (27) für Ketten einer Hebevorrichtung versehen ist.

9. Reaktor nach einem der Ansprüche 1 bis 8, dadurch gekennzeichnet, daß er entsprechend einer Abfallmulde auf an sich bekannten Kraft- oder Schienenfahrzeugen transportierbar ist.

10. Reaktor nach einem der Ansprüche 1 bis 9, dadurch gekennzeichnet, daß der Behälter (3) und/oder die Haube (28) im leeren Zustand platzsparend ineinanderstapelbar ausgebildet sind.

## Claims

1. Reactor (1) for the cleaning of solid materials (14), e.g. soil, slurries and metal shavings, contaminated with contaminants, e.g. hydrocarbons, comprising a spray device (43) and an aeration device (17) for the solid material (14),
wherein a housing (2) of the reactor (1) has an upwardly open, trough-like container (3) with a bottom (4) and side walls (5 to 8),
wherein a false bottom (11) carrying the solid material (14) and having perforations (10) is arranged at a vertical distance (9) above the bottom (4) in the container (3),
wherein an intermediate space (12) between the bottom (4) and the false bottom (11) is provided with an outlet (13) for liquid which passes through the solid material (14) and the false bottom (11),
wherein the container (3) is sealingly closable by a cover (28),
and wherein an outlet (37) for gases is provided in the housing (2) above the solid material (14),
characterised in that the cover is formed as a hood (28) which can be set sealingly on an upper edge of the container (3) with its side walls (28 to 32) extending upwards above the container (3),
that the hood (28) has an opening (36) which is sealable tightly by a lid (35),
that the spray device (43) includes at least one spray head (42) mounted on the lid,
and that the outlet (37) for gases is provided in the hood (28).

2. Reactor according to claim 1, characterised in that the hood (28) is provided with hoops (38, 39) for a lifting device.

3. Reactor according to claim 1 or 2, characterised in that at least one sampling inlet (40), which is re-closable by a cap (41) as necessary, is mounted on the hood (28).

4. Reactor according to one of claims 1 to 3, characterised in that in the intermediate space (12) there is provided a pipe (23) having a connection (22) for the selective creation of reduced pressure or for the introduction of pressure pulses into the intermediate space (12).

5. Reactor according to one of claims 1 to 4, characterised in that the aeration device (17) in the container (3) comprises a pipe system (16) to be within the solid material (14) to be treated, the pipe system being arranged to be connected to an external source of compressed air or compressed oxygen by way of a connector (19).

6. Reactor according to claim 5, characterised in that the pipe system (16) comprises at least one elastic sleeve (20) with slots (21).

7. Reactor according to one of claims 1 to 6, characterised in that the container (3) is provided with at least one roller (25) adjacent to the bottom of one (6) of the side walls (5 to 8) and, spaced from said at least one roller (25), is provided with at least one hoop (26) for a lifting device.

8. Reactor according to one of claims 1 to 7, characterised in that the container (3) is provided with chain cleats (27) for chains of a lifting device.

9. Reactor according to one of claims 1 to 8, characterised in that it is transportable on a motorised or railed vehicle known per se, in the manner of a sliding trough.

10. Reactor according to one of claims 1 to 9, characterised in that the container (3) and/or the hood (28) can be stacked one within the other in the empty state to save space.

## Revendications

1. Réacteur (1) pour la purification de solides (14), par exemple de sols, de boues ou de copeaux de métal, contaminés par des polluants, par exemple des hydrocarbures,
avec un dispositif d'irrigation (43) et un dispositif d'aération (17) des solides (14),
dans lequel un logement (2) du réacteur (1) présente un réservoir (3) en forme de cuvette ouverte en haut, avec un fond (4) et des parois latérales (5 à 8),
dans lequel à une distance verticale (9) du fond (4) dans le réservoir (3) est disposé un double fond (11) présentant des perforations (10) et portant les solides (14),
dans lequel un espace (12) situé entre le fond (4) et le double fond (11) est pourvu d'une évacuation (13) pour du liquide qui a pénétré à travers les solides (14) et le double fond (11),
dans lequel le réservoir (3) peut être fermé par une couverture (28),
et dans lequel il est prévu au-dessus des solides (14) une évacuation (37) pour les gaz contenus dans le logement (2),
caractérisé en ce que la couverture est conçue sous forme de chape (28) pouvant être posée de manière étanche sur un bord supérieur du réservoir (3) avec des parois latérales (28 à 32) s'étendant vers le haut au-delà du réservoir (3),
en ce que la chape (28) présente une ouverture (36) pouvant être fermée de façon étanche par un couvercle (35),
en ce que le dispositif d'irrigation (43) présente au moins une tête de pulvérisation (42) montée sur le couvercle,
et en ce que l'évacuation (37) pour les gaz est prévue dans la chape (28).

2. Réacteur selon la revendication 1, caractérisé en ce que la chape (28) est pourvue d'oeillets d'accrochage (38, 39) pour un dispositif de levage.

3. Réacteur selon la revendication 1 ou 2, caractérisé en ce qu'au moins un tube d'échantillonnage (40) pouvant éventuellement être refermé avec un capuchon (41) est disposé sur la chape (28).

4. Réacteur selon l'une ou l'ensemble des revendications 1 à 3, caractérisé en ce qu'un tuyau (23) pourvu d'un raccord (22) pour l'application sélective d'une dépression ou de coups de pression de gaz dans l'espace (12) est disposé dans l'espace (12).

5. Réacteur selon l'une ou l'ensemble des revendications 1 à 4, caractérisé en ce que le dispositif d'aération (17) présente dans le réservoir (3) un système de conduites (16) posé à l'intérieur des solides (14), qui peut recevoir de l'air comprimé ou de l'oxygène comprimé de l'extérieur par un raccord (19).

6. Réacteur selon la revendication 5, caractérisé en ce que le système de conduites (16) présente au moins un tube élastique (20) pourvu de fentes (21).

7. Réacteur selon l'une ou l'ensemble des revendications 1 à 6, caractérisé en ce que le réservoir (3) comporte en bas de l'une (6) des parois latérales (5 à 8) au moins une roulette (25) et à distance de ladite au moins une roulette (25) au moins un oeillet d'accrochage (26) pour un dispositif de levage.

8. Réacteur selon l'une ou l'ensemble des revendications 1 à 7, caractérisé en ce que le réservoir (3) est pourvu d'accrochages de chaînes (27) pour des chaînes d'un dispositif de levage.

9. Réacteur selon l'une ou l'ensemble des revendications 1 à 8, caractérisé en ce qu'il peut être transporté comme un caisson à déchets sur des véhicules à moteur ou sur rails connus.

10. Réacteur selon l'une ou l'ensemble des revendications 1 à 9, caractérisé en ce que le réservoir (3) et/ou la chape (28) sont conçus de façon à pouvoir être empilés l'un dans l'autre lorsqu'ils sont vides de façon à économiser de la place.
